Europäisches Patentamt

European Patent Office

Office européen des brevets

(19)

(11) Veröffentlichungsnummer: **0 022 878**
**B1**

(12) **EUROPÄISCHE PATENTSCHRIFT**

(45) Veröffentlichungstag der Patentschrift: **22.02.84**

(21) Anmeldenummer: **79102503.4**

(22) Anmeldetag: **18.07.79**

(51) Int. Cl.³: **H 05 B 3/14, A 47 J 29/02, H 05 B 3/68**

(54) Heizeinrichtung für elektrisch beheizte Geräte.

(43) Veröffentlichungstag der Anmeldung:
**28.01.81 Patentblatt 81/4**

(45) Bekanntmachung des Hinweises auf die Patenterteilung:
**22.02.84 Patentblatt 84/8**

(84) Benannte Vertragsstaaten:
**AT CH DE FR GB IT SE**

(56) Entgegenhaltungen:
**CH - A - 104 745
CH - A - 241 718
DE - C - 1 690 587
DE - U - 7 804 316
FR - A - 2 077 007
GB - A - 117 099**

(73) Patentinhaber: **ELPAG AG CHUR
Quaderstrasse 11
CH-7001 Chur (CH)**

(72) Erfinder: **Bleckmann, Ingo, Dipl.-Ing. Dr.
Ignaz-Rieder-Kai 11
A-5020 Salzburg (AT)**

(74) Vertreter: **Liedl, Gerhard et al,
Patentanwälte Liedl, Nöth Steinsdorfstrasse 21-22
D-8000 München 22 (DE)**

Courier Press, Leamington Spa, England.

## Heizeinrichtung für elektrisch beheizte Geräte

Die Erfindung betrifft ein elektrisch beheiztes Gerät, bei dem der Boden oder eine Seitenwand einen senkrecht frei abstehenden Ansatz mit einem Schlitz besitzt, in welchen ein Plättchen aus einem Widerstandsmaterial mit einem positiven Temperaturkoeffzienten als Heizeinrichtung eingeklemmt ist.

Aus der DE—U—7 821 809 ist eine Heizeinrichtung für ein elektrisch beheiztes Gerät bekannt, bei dem die Seitenwand einen senkrecht abstehenden Ansatz mit einem Schlitz besitzt, in welchen ein Plättchen aus einem Widerstandsmaterial mit einem positiven Temperaturkoeffizienten als Heizeinrichtung eingeklemmt ist. Um einen guten Wärmekontakt zwischen dem Heizelement und den Ansatzwänden herzustellen, sind die Ansatzwände gegen das Heizelement gepreßt. Zur Sicherung des Preßdruckes sollen sich die freien Enden der Schenkel der Rinne übergreifen oder gegebenenfalls mäanderförmig ineinander verzahnen. Die Praxis zeigte jedoch, daß auf diese Weise kein definierter und konstanter Anpreßdruck erzielt werden kann. Insbesondere ist in keiner Weise gewährleistet, daß sich ein gleichmäßiger konstanter Anpreßdruck über die gesamte Fläche des Bariumtitanatplättchen ergibt.

Aus der DE—U—7 838 483 und aus der CH—A—104 745 ist es bekannt, den Anpreßdruck durch Klemmschrauben bzw. durch Klemmkeile zu erzeugen. Klemmschrauben haben den Nachteil, daß die Druckübertragung punktförmig erfolgt. Die Übertragung durch Zwischenglieder einschließlich eventuellen Verkantungen oder dgl. hat zur Folge, daß kein gleichmaßiger Anpreßdruck über die gesamte Fläche erzielt oder aufrechterhalten werden kann. Dazu kommt insbesondere bei Klemmkeilen, daß sich infolge der thermischen Wechselbeanspruchungen der Keil aus der Verklemmung herausarbeitet, so daß also der Klemmdruck nachläßt.

Der Einsatz von elektrischen Heizeinrichtungen, deren Widerstandsmaterial einen positiven Temperaturgradienten besitzt, wie diese beispielsweise aus der DE—C—1 690 587 und DE—U—7 084 360 bekannt sind, und die z.B. aus mit Strontium dotiertem Bariumtitanat bestehen, wäre für verschiedene Anwendungsgebiete äußerst interssant.

Heizgeräte, insbesondere für den Haushaltsbedarf, wie Kochtöpfe, Friteusen, Kaffeemaschinen, Eierkocher, Inhalationsgeräte oder dgl. sind im allgemeinen mit Rohrheizkörpern bestückt. Da die Geräte unter den Gebrauchsbedingungen oder aus Sicherheitsgründen bei Erreichen einer bestimmten Höchsttemperatur abschalten sollen, werden zusätzlich zu den Rohrheizkörpern Thermostateinrichtungen benötigt. Abgesehen davon, daß sich hierdurch der Aufwand vergrößert, ergibt sich nach wie vor eine Restunsicherheit. So spricht oftmals die Thermostateinrichtung auf örtliche Überhitzungen des Rohrheizkörpers nicht an, so daß insbesondere bei Verwendung von Kunststoffen für das Gerät eine entsprechende Brandgefahr nicht auszuschließen ist. Die Thermostateinrichtung müßte dementsprechend so konstruiert sein, daß sie den Rohrheizkörper über seine gesamte Länge abtastet und daß sie anspricht, wenn an irgendeiner Stelle des Rohrheizkörpers die zulässige Temperatur überschritten wird. Eine vollständig zufriedenstellende Lösung dieses Problems mit tragbarem Aufwand ist bisher nicht gelungen.

Elektrische Heizeinrichtungen mit positivem Temperaturkoeffizienten—in der Kurzbezeichnung PTC-Elemente genannt—nehmen mit zunehmender Erhitzung weniger Strom auf, so daß zwangsläufig eine bestimmte Maximaltemperatur nicht überschritten werden kann. Bei Anwendung derartiger PTC-Elemente, z.B. bei einem Eierkocher, ergibt sich zu Beginn des Wassererhitzungsvorganges die maximale Stromaufnahme, da ja die in der Schale des Gerätes und damit auch die in dem angesetzten PTC-Element herrschende Temperatur am geringsten ist. Wenn das in die Schale gefüllte Wasser die Siedetemperatur erreicht, fällt die Stromaufnahme auf einen Wert ab, der gerade ausreicht, um den Siedevorgang aufrechtzuerhalten. Nach der Verdunstung des Kochwassers erreicht das PTC-Element eine noch höhere Temperatur, wodurch die Stromaufnahme auf einen Wert absinkt, wie er zum Warmhalten der Eier ausreicht. Eine Überhitzung des Gerätes mit entsprechender Brandgefahr ist ausgeschlossen. Es gelingt also mit derartigen PTC-Elementen theoretisch einerseits eine Automatisierung des erwünschten Erhitzungsvorganges und andererseits ein sicherer Ausschluß von Überhitzungen.

Obwohl dieser Vorgang von der theoretischen Seite einleuchtend ist, stehen seiner Realisierung große Schwierigkeiten entgegen. Einerseits ist die Wärmeleitung bei Widerstandsmaterialien mit positiven Temperaturkoeffizienten, welche praktisch in Frage kommen, sehr schlecht. Sie beträgt bei reinem Bariumtitanat 0,03 W/cm und Grad ist also 400 mal schlechter als Kupfer. Durch die Dotierung wird die Wärmeleitung noch ungünstiger. Andererseits ergibt sich bei der praktischen Anwendung zwangsläufig ein einseitiger Wärmeabfluß, d.h. die beispielsweise an dem Boden oder einer Seitenwand des Gerätes anliegende Fläche des PTC-Elementes hat infolge des Wärmeabflusses zwangsläufig eine geringere Temperatur als beispielsweise die gegenüberliegende Seite. Daraus ergibt sich eine ungleichmäßige Wärmebelastung des PTC-Elementes, wodurch der Regelungsvorgang undefiniert wird. Durch die schlechte Wärmeleitung in Verbindung mit der ungleichmäßigen Belastung entstehen in dem PTC-Element Überhitzungszonen, die einen Umschlag von dem tetragonalen in das kubischflächenzentrierte Kristallgitter zur Folge haben. Die Folge dieses Umschlages ist eine 20% ige Volumenänderung, welche agbesehen von der Veränderung der Anlagespannung zu inneren Spannungen führt, unter welchen das PTC-Element im allgemeinen zerbricht.

Man benötigt außerdem einen konstanten Wärmeübergang des PTC-Elementes auf das zu beheizende Gerät und dementsprechend einen konstanten Anlagedruck des PTC-Elementes. Wenn der Wärmeübergang auf das Gerät z.B. durch Nachlassen des Anlagedruckes schlechter wird, führt dies dazu, daß das PTC-Element eine höhere Temperatur annimmt, womit gleichzeitig die Stromaufnahme des PTC-Elementes abfällt. Bei einem Eierkocher bedeutet dies beispielsweise, daß die Kochtemperatur überhaupt nicht mehr erreicht wird, da die Heizleistung des PTC-Elementes unter der schwächeren Stromaufnahme nicht mehr ausreicht, um die Wärmeabgabe bei Kochtemperatur auszugleichen.

Heizeinrichtungen der in Rede stehenden Gattung sind weiterhin aus der DE—OS 27 43 880 und den deutschen Gebrauchsmustern 77 30 233, 78 21 809, 78 38 483 und 78 38 558 bekannt.

Selbst wenn man nun die obengenannten Keillösungen mit PTC-Elementen anstelle den dort beschriebenen üblichen Heizelementen bestrückt, zeigt die Praxis, daß der gewünschte Effekt bisher noch nicht erreicht werden konnte. Abgesehen davon, daß beim Eindrücken der Keile die PTC-Elemente leicht beschädigt werden können, ist es unmöglich, einen konstanten gleichmäßigen Anlagedruck auf die gesamte Oberfläche des PTC-Elementes zu erzielen. Einerseits ist es schwierig abzuchätzen oder exakt festzustellen, welcher Druck im Inneren des Schlitzes oder der Nut auf das PTC-Plättchen in Richtung der Flächennormalen des Keiles ausgeübt wird, wenn ein bestimmter Außendruck erzeugt wird. Andererseits führen bereits geringfügige Unregelmäßigkeiten an den Innenwänden des Schlitzes, an der Oberfläche des Keiles oder am eingelegten Schutzplättchen dazu, daß sich der Keil punktförmig oder linienförmig an dem Plättchen oder der Nutinnenwand abstützt. Man müßte also die Teile äußerst exakt bearbeiten, was für Massenartikel der in Rede stehenden Art ausscheidet. Eine punkt- oder linienförmige Druckübertragung auf das PTC-Plättchen ist jedoch in dem angegebenen Zusammenhang schädlich, da ja dann die übrige, nicht unter Druck stehende Fläche des PTC-Elementes eine höhere Temperatur annimmt, so daß gleichzeitig die Stromaufnahme des PTC-Elementes abfällt. Hierzu kommt, daß die Keile das Bestreben haben, unter den thermischen Wechselbeanspruchungen sich nach und nach zu lösen, wobei bereits Verschiebungen in der Millimetergrößenordnung zu völligen Aufhebung der Druckanlage führen können.

Der Erfindung liegt die Aufgabe zugrunde, eine Heizeinrichtung mit PTC-Elementen vorzuschlagen, bei der eine gleichmäßige Druckbelastung des PTC-Elementes auch unter thermischen Wechselbelastungen und damit ein gleichmäßiger Wärmeabfluß von fast der gesamten Oberfläche des Heizelementes auf das zu beheizende Gerät gewährleistet ist.

Die Lösung der Aufgabe ergibt sich aus den kennzeichnenden Merkmalen des Hauptanspruches. Der Unteranspruch beschreibt eine bevorzugte Ausführungsform des Heizgerätes.

Die gemäß der Erfindung verwendeten Plättchen bestehen beispielsweise aus dotiertem Bariumtitanat. Sie besitzen eine Stärke von unter 2 mm, zum Beispiel 1,6 mm. Anstelle der Plättchen können auch Folien, zum Beispiel aus Strontiumtitanat in Form von Pietso-Kirstallen, verwendet werden. Bei einer Heizleistung von 400 W, wie sie zum Beispiel bei einem Eierkocher benötigt wird, besitzen die Plättchen eine Kantenlänge von einigen wenigen Zentimetern. Je nach der erwünschten Heizleistung und dem zur Verfügung stehenden Raum können mehrere Plättchen, zum Beispiel mit ihrem Schmalseiten aneinander stoßend, in einen entsprechend lang ausgebildeten Schlitz untergebracht werden.

Würde man derartige Plättchen, was an sich naheliegend ist, flach an den Boden einer zu beheizenden Schale oder eines Topfes anlegen und für einen entsprechenden Anpreßdruck Sorge tragen, dann ergibt sich ein unmittelbarer Wärmefluß auf die Schale oder auf den Topf nur über die anliegende Fläche, also weniger als von der Hälfte der Gesamtoberfläche des Plättchens. Die zwangsläufige Folge ist einer seits, daß mangels unmittelbarem Wärmeabfluß von der dem Topfboden abgewendeten Fläche des Plättchens diese eine wesentlich höhere Temperatur annimmt als der Topfboden. Durch die höhere Temperatur sinkt jedoch die Stromaufnahme des Plättchens; der gesamte Regelvorgang wird un definiert. Weiterhin entsteht in dem Plättchen ein starkes Temperaturgefälle, welches zu dem beschriebenen unerwünschten Umschlag der Kristallgitterstruktur führen kann. Weiterhin läßt sich auf diese Weise kein definierter Anpreßdruck erzielen. Agbesehen davon, daß die entsprechenden Hilfseinrichtungen, wie Schraubverbindungen, Keile oder dgl., aufwendig sind, unterliegen diese ebenfalls einer Wärmeausdehnung, so daß sich dementsprechend der Anpreßdruck und damit der Wärmeübergang mit zunehmender Erhitzung ändern und undefiniert werden.

Durch die gemäß Erfindung vorgeschlagene Lösung ergibt sich ein definierter und gleicher Wärmeübergang von beiden Seiten des Plättchens auf die plattenförmigen Seitenwände des Ansatzes. Die Stärke der plattenförmigen Seitenwände im Verhältnis zur Breite des Schlitzes und zur Stärke des Plättchens wird so berechnet, daß die Schlitzbreite über den von der Praxis erforderten Temperaturbereich im wesentlichen konstant bleibt. Aufgrund des daraus resultierenden konstanten Anpreßdruckes ergibt sich auch ein über den gesamten Temperaturbereich konstanter Wärmeübergang.

Die beiliegenden Zeichnungen dienen zusammen mit der folgenden Beschreibung einer bevorzugten speiziellen Ausführungsform der weiteren Erläuterung der Erfindung. Es zeigen:

Fig. 1 eine schaubildliche Ansicht eines Plättchens aus einem Widerstandsmaterial mit einem positiven Temperaturkoeffizienten;

Fig. 2 einen Schnitt einer Schale eines elektrisch beheizten Gerätes, insbesonderer eines Eierkochers;

Fig. 3 in vergrößertem Maßstab die Anordnung des Plättchens gemäß Fig. 1 in einem Schlitz am Boden der Schale gemäß Fig. 2;

Fig. 4 eine Seitenansicht in Richtung des Pfeiles 4 in Fig. 3.

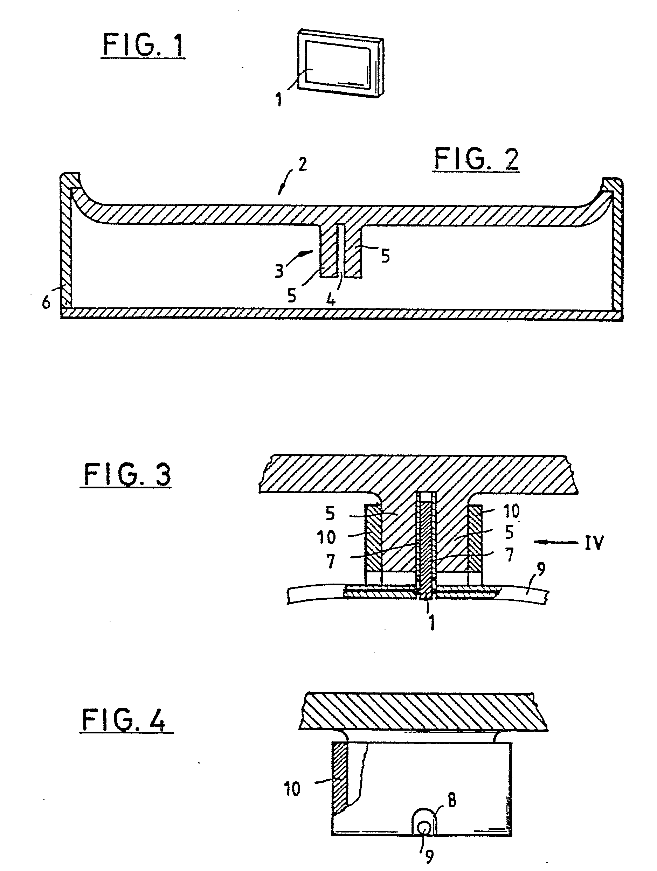

Das in Fig. 1 dargestellt Plättchen 1 besteht vorzugsweise aus mit Strontium dotiertem Bariumtitanat. Seine Stärke beträgt etwa 1,6 mm, die Querschnittsfläche beträgt etwa 2,8 bis 4 cm$^2$, wobei bei einer angelegten Spannung von 220 V mindestens 150 Watt erzeugt werden.

Die zum Beispiel als Druckgrußkörper hergestellt Schale 2 eines elektrisch beheizten Gerätes, zum Beispiel eines Eierkochers, besitzt einen bereits bei der Herstellung des Druckgußkörpers angeformten Ansatz 3. Durch nachträgliches Einfräsen oder bereits bei dem Gußvorgang wird ein Schlitz 4 gebildet, dessen Breite etwa 2 mm beträgt. Durch den Schlitz 4 entstehen also zwei parallel zueinander verlaufende plattenförmige Seitenwände 5. Die Tiefe des Schlitzes 4 bzw. die Höhe der Plattenförmigen Seitenwände 5 entspricht etwa der Höhe des Plättchens 1—also bei der praktischen Ausführung etwa 14 mm. Diese zusätzliche Bauhöhe ist nicht störend, da im Unterteil 6 des beheizten Gerätes die entsprechenden Anschlüsse, Stecker, Schalter usw. untergebracht werden müssen.

In den Schlitz 4 wird nun das Heizelement 1 zusammen mit zwei dünnen Isolierplättchen 7, zum Beispiel aus Glimmer, Aluminiumoxid oder Polyimid (Handelsname Kapton) eingeschoben. Die plattenförmigen Seitenwände 5 sind von unten her bei 8 eingefräst, so daß die an das Kontaktmaterial z.B. Silber oder Aluminium des Plättchens 1 angeschlossenen Anschlußkabel 9 leicht herausgeführt werden können.

Nach Einschieben des Plättchens 1 zusammment mit der Isolierung 7 in den Schlitz 4 wird über die plattenförmigen Seitenwände 5 ein erhitzter Klemmring 10 geschoben. Dieser erzeugt bei seiner Abkühlung einen entsprechenden Druck auf die Seitenwände 5 und durch entsprechende Verengung des Schlitzes 4 auf das Plättchen 1. Durch den konstanten Anpreßdruck ist ein gleichmäßiger Wärmeübergang sowohl von der Vorderseite als auch von der Rückseite des Plättchens 1 auf die plattenförmigen Seitenwände 5 und von dort auf die Schale 2 gewährleistet.

Bei einer Erhitzung versuchen sich die Seitenwände 5 sowohl nach außen als auch nach innen auszudehnen. Bei entsprechender Dimensionierung wird sich die Breite des Schlitzes 4 bei einer Erhitzung dementsprechend nicht vergrößern. Es ist damit gewährleistet, daß sich der Wärmeübergang von dem Plättchen 1 auf die plattenförmigen Seitenwände 5 und auf die Schale 2 bei Erhitzung nicht verschlechtert. Eine sich in Grenzen haltende Erhöhung des Anpreßdruckes unter entsprechender Verbesserung des Wärmeüberganges ist unschädlich.

Es ist ersichtlich, daß ähnliche Lösungen, bei denen also das Plättchen 1 mit dem positiven Temperaturkoeffizienten im wesentlichen senkrecht zu der Wärme aufnehmenden Fläche—in dem dargestellten Beispiel die Schale 2—angeordnet wird, auch bei anderen elektrisch beheizten Geräten, insbesonere bei Haushaltsgeräten, gegebenenfalls mit entsprechender Abwandlung, angewendet werden können. Selbstverständlich können mehrere Ansätze 3 vorgesehen sein. Es können auch in einem Ansatz 3 mehrere Plättchen 1 untergebracht werden, wenn eine größere Heizleistung benötigt wird. Gegebenenfalls können die Plättchen zur Variation der Heizleistung wahlweise in Serie oder in Parallelschaltung betrieben werden.

Durch die vorgeschlagene Lösung ergibt sich außer den erwähnten Vorteilen eine erhebliche Energieeinsparung im allgemeinen gegenüber Lösungen mit Rohrheizkörper von etwa 30%.

**Patentansprüche**

1. Elektrisch beheiztes Gerät, bei dem der Boden oder eine Seitenwand einen senkrecht frei abstehenden Ansatz (3) mit einem Schlitz (4) besitzt, in welchen ein Plättchen (1) aus einem Widerstandsmaterial mit einem positiven Temperaturkoeffizienten als Heizeinrichtung eingeklemmt ist, dadurch gekennzeichnet, daß auf den zwei parallel zueinander verlaufende, plattenförmige Seitenwände aufweisenden Ansatz (3) ein erhitzter Klemmring (10) aufgeschoben ist, der bei Abkühlung den Schlitz (4) verjüngt und damit auf das Plättchen (1) einen definierten Klemmdruck ausübt, wobei die Dimensionierung und das Material des Klemmrings auf die Dimensionierung des Plättchens so abgestimmt ist, daß beim Erhitzen bis zu den in der Praxis auftretenden Höchsttemperaturen unter der Wärmeausdehnung sich die Breite des Schlitzes nicht vergrößert oder etwas verkleinert.

2. Gerät nach Anspruch 1, dadurch gekennzeichnet, daß das Plättchen (1) eine Stärke von unter 2 mm besitzt.

## Claims

1. An electrically heated apparatus, the bottom or a side wall of which has a vertical, freely extending projection (3) having a slit (4), in which a platelet of resistive material having a positive temperature coefficient and serving as a heating device is clamped, characterized in that a heated clamping ring (10) has been slid over the projection (3) having two plate-shaped side walls extending in parallel to taper the slit (4) upon cooling and thus exert a defined clamping pressure upon the platelet (1), wherein the dimensions and the material of the clamping ring are adapted to the dimensions of the platelet in such manner that upon heating to the highest temperatures encountered in practice, the width of the slit is not enlarged or reduced as a result of thermal expansion.

2. An appratus according to claim 1, characterized in that the plate (1) has a thickness of less than 2 mm.

## Revendications

1. Appareil à chauffage électrique, dont le fond ou une paroi latérale présente une saillie (3) verticale munie d'une fente (4), dans laquelle est inséré le dispositif de chauffage constitué par une plaquette (1) en matériau résistif présentant un coefficient positif de température, caractérisé en ce que la saillie (3), composée de deux parois latérales parallèles en forme de plaques, reçoit un anneau de serrage (10) préchauffé, dont le refroidissement provoque un rétrécissement de la fente (4), exerçant ainsi une pression de serrage définie sur la plaquette (1), le choix des dimensions et du matériau de l'anneau de serrage par rapport au dimensionnement de la plaquette étant tel, qu'un chauffage poussé jusqu'aux températures maximales apparaissant dans la pratique ne provoque aucune variation de largeur de la fente sous l'effet de la dilatation thermique.

2. Appareil selon la revendication 1, caractérisé par une épaisseur de la plaquette (1) inférieure à 2 mm.

FIG. 1

1

FIG. 2

2

3

5

5

4

5

6

FIG. 3

5

10

7

10

5

7

IV

9

1

FIG. 4

10

8

9